(19) Europäisches Patentamt / European Patent Office / Office européen des brevets

(11) **EP 3 904 470 B1**

(12) **EUROPEAN PATENT SPECIFICATION**

(45) Date of publication and mention
of the grant of the patent:
**15.04.2026 Bulletin 2026/16**

(21) Application number: **19901426.7**

(22) Date of filing: **06.12.2019**

(51) International Patent Classification (IPC):
**C09D 11/322** (2014.01)    **C09D 11/106** (2014.01)
**C09D 11/38** (2014.01)

(52) Cooperative Patent Classification (CPC):
**C09D 11/106; C09D 11/322;** C09D 11/10;
C09D 11/324; C09D 11/326; C09D 11/40

(86) International application number:
**PCT/JP2019/047924**

(87) International publication number:
**WO 2020/137460 (02.07.2020 Gazette 2020/27)**

(54) **AQUEOUS INK FOR INKJET PRINTING**

WÄSSRIGE TINTE FÜR TINTENSTRAHLDRUCK

ENCRE AQUEUSE POUR IMPRESSION À JET D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2018 JP 2018243725**

(43) Date of publication of application:
**03.11.2021 Bulletin 2021/44**

(73) Proprietor: **Kao Corporation**
**Tokyo 103-8210 (JP)**

(72) Inventors:
• **EGAWA, Tsuyoshi**
**Wakayama-shi, Wakayama 640-8580 (JP)**
• **AKAGI, Ryuichi**
**Wakayama-shi, Wakayama 640-8580 (JP)**

• **KOZAKE, Katsuyuki**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
JP-A- 2005 330 309    JP-A- 2005 330 309
JP-A- 2009 263 557    JP-A- 2009 263 557
JP-A- 2010 248 357    JP-A- 2011 157 417
JP-A- 2011 157 417    JP-A- 2012 184 376
JP-A- 2013 112 801    JP-A- 2013 112 801
JP-A- 2013 163 289    JP-A- 2013 163 289
JP-A- 2017 119 845    JP-A- 2018 108 651

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a water-based ink for ink-jet printing, and an ink-jet printing method using the water-based ink.

BACKGROUND OF THE INVENTION

In ink-jet printing methods, droplets of ink are directly ejected from very fine nozzles and allowed to adhere to a printing medium to obtain a printed material on which characters or images are printed, etc. The ink-jet printing methods have become rapidly spread because of various advantages such as easiness of full coloration, low cost and non-contact with the printing medium. In recent years, in particular, from the viewpoint of improving weathering resistance and water resistance of the resulting printed material, the ink-jet printing methods using an ink containing a pigment as a colorant have become predominant.

Meanwhile, soft packaging has been extensively used for packaging foods, etc. In the soft packaging, names of goods to be packaged, etc., are indicated by printing on a thin flexible low-liquid absorbing printing medium formed of a synthetic resin, etc. The printing for the soft packaging has been conducted mainly by gravure printing. However, a gravure ink used in the gravure printing usually contains an organic solvent to disperse or dissolve a pigment or a resin therein, and therefore tends to pose problems concerning burden on working environments, etc.

In addition, as regards the printing for the soft packaging, studies have also been made on an ink-jet printing method using an active energy ray-curable ink. However, the active energy ray-curable ink has a fear concerning generation of a malodor therefrom. In particular, when using the active energy ray-curable ink in the printing for the soft packaging that has been often used for food packaging, the problem concerning generation of the malodor tends to exert a large adverse influence thereon.

For this reason, development of a water-based ink for ink-jet printing which has a less burden on working environments has now proceeded.

For example, JP 2014-515051A (Patent Literature 1) discloses an aqueous ink composition containing at least 60% by weight of water, an acrylic latex polymer suspension, a polyurethane suspension, a polyethylene wax suspension and about 10% to about 30% of an organic solvent, as an aqueous ink composition that is excellent in reliable jetting, adhesion properties, film durability, etc.

JP 2018-115325A (Patent Literature 2) discloses a magenta ink for ink-jetting which contains a pigment, a water-soluble organic solvent, a surfactant and water in which an azo pigment is contained in an amount of 1 to 10% by weight, a water-soluble organic solvent having a static surface tension of 22 to 32 mN/m and a HLB value of 2 to 8 and containing one or more hydroxy groups is contained in an amount of 5 to 50% by weight, and the surfactant contains a surfactant having an HLB value of 1.5 to 8, as a magenta ink that is excellent in image clarity, ejection stability, etc., when used in ink-jet printing on a hardly adsorptive substrate.

JP 2009-263557 A (Patent Literature 3) describes a water-based inkjet ink which includes a pigment, a resin and water, and contains at least one glycol ether with an HLB value of 7.0-7.5 calculated by the Davis method, and one glycol ether with an HLB value of 8.0-9.5.

JP 2013-163289 A (Patent Literature 4) describes an ink containing a resin, a pigment, a solvent and water ejected from an inkjet head which is made to land on a recording medium whose image recording surface is made of polyvinyl chloride.

JP 2013-112801 A (Patent Literature 5) concerns an inkjet ink containing a coloring material, a resin, water, and a solvent in the range of 10% by weight or more and 35% by weight or less, and a fluorine-based or silicon-based surfactant, and having a viscosity of 20 cP or less.

JP 2011-157417 A (Patent Literature 6) describes an inkjet ink containing 25 mass% or more of a water-compatible solvent with an SP value of 19-26 and having a water content of 20-55 mass%, wherein the inkjet ink contains a C5-C10 1,2-alkanediol or acetylene glycol surfactant and a silicone surfactant or a fluorine surfactant.

JP 2005-330309 A (Patent Literature 7) relates to a water-based inkjet ink comprising a compound having a piperazine-2,5-dione structure.

SUMMARY OF THE INVENTION

The present invention is defined by the appended claims and relates to a water-based ink for ink-jet printing on a low-liquid absorbing printing medium, containing a pigment, a water-insoluble polymer dispersant, a water-soluble organic solvent and water, in which:

the water-soluble organic solvent contains a polypropylene glycol monoalkyl ether;
a content of the water-soluble organic solvent in the ink is not less than 29% by mass and not more than 35% by mass; and
a content of dipropylene glycol monomethyl ether (S1) in the water-soluble organic solvent is not less than 75% by mass and not more than 96% by mass.

## DETAILED DESCRIPTION OF THE INVENTION

In soft packaging, etc., it has been required to print product information such as tradenames, a statement of virtues, etc. However, the conventional water-based inks as described in Patent Literatures 1 and 2 tend to be hardy wet-spread over a low-liquid absorbing printing medium used for the soft packaging, etc., and hardly penetrated into the printing medium, and therefore tend to be insufficient in adhesion properties to the low-liquid absorbing printing medium (hereinafter also referred to merely as "substrate-adhesion properties"). Thus, it has been conventionally difficult to obtain a high-quality printed material using the conventional water-based inks.

The present invention relates to a water-based ink for ink-jet printing which is capable of providing a printed material that is excellent in substrate-adhesion properties while maintaining high image density, and an ink-jet printing method using the water-based ink.

The present inventors have found that the aforementioned conventional problems can be solved by a water-based ink containing a pigment, a polymer dispersant and a water-soluble organic solvent in which a water-soluble organic solvent containing a specific amount of dipropylene glycol monomethyl ether is used in a specific amount.

That is, the present invention relates to the ink, the method and the use as defined by the appended claims.

In accordance with the present invention, it is possible to provide a water-based ink for ink-jet printing which is capable of providing a printed material that is excellent in substrate-adhesion properties while maintaining high image density, and an ink-jet printing method using the water-based ink.

[Water-Based Ink for Ink-Jet Printing]

The water-based ink for ink-jet printing according to the present invention is a water-based ink for ink-jet printing on a low-liquid absorbing printing medium (hereinafter also referred to merely as an "ink of the present invention"), the water-based ink containing a pigment, a polymer dispersant, a water-soluble organic solvent and water, in which:

the water-soluble organic solvent contains a polypropylene glycol monoalkyl ether;
a content of the water-soluble organic solvent in the ink is not less than 29% by mass and not more than 35% by mass; and
a content of dipropylene glycol monomethyl ether (S1) in the water-soluble organic solvent is not less than 75% by mass and not more than 96% by mass.

Meanwhile, the term "water-based" as used herein means that water has a largest content among components of a medium contained in the water-based ink.

The term "low-liquid absorbing" as used herein means a concept including both of low-liquid absorbing properties and non-liquid absorbing properties of a printing medium against an ink. The "low-liquid absorbing" properties may be evaluated by absorption of pure water to the printing medium. More specifically, the "low-liquid absorbing" means that the water absorption per a unit surface area of the printing medium as measured by contacting the printing medium with pure water for 100 milliseconds is not less than 0 g/m$^2$ and not more than 10 g/m$^2$.

The term "printing" as used herein means a concept that includes printing or typing operation for printing characters or images.

The ink of the present invention is capable of providing a printed material that is excellent in substrate-adhesion properties while maintaining high image density. The reason why the aforementioned advantageous effects can be attained by the present invention is considered as follows, though it is not clearly determined yet.

That is, in the present invention, it is considered that by incorporating a water-soluble organic solvent containing dipropylene glycol monomethyl ether in an amount of not less than 75% by mass and not more than 96% by mass into the ink so as to be present in the ink in an amount of not less than 29% by mass and not more than 35% by mass, the resulting ink can be easily wet-spread over the low-liquid absorbing printing medium to thereby enhance an image density thereof. In addition, it is also considered that a sufficient contact area between the polymer dispersant in the ink of the present invention and the low-liquid absorbing printing medium can be ensured, and it is therefore possible to obtain a printed material that is excellent in substrate-adhesion properties.

<Pigment>

The pigment used in the present invention may be either an inorganic pigment or an organic pigment, and may also be used in the form of a lake pigment or a fluorescent pigment. In addition, the inorganic or organic pigment may also be used in combination with an extender pigment, if required.

Specific examples of the inorganic pigment include carbon blacks, metal oxides such as titanium oxide, iron oxide, red iron oxide, chromium oxide, etc., iridescent nacreous pigments, and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments such as a white pigment, a black pigment, a gray pigment, etc., and chromatic color pigments such as a yellow pigment, a magenta pigment, a cyan pigment, a blue pigment, a red pigment, an orange pigment, a green pigment, etc. Among these pigments, preferred are chromatic color pigments, more preferred are a magenta pigment, a red pigment and an orange pigment, even more preferred are a magenta pigment and a red pigment, and further even more preferred is a magenta pigment.

In addition, the chromatic color pigments are preferably quinacridone pigments. Specific examples of the preferred chromatic color pigments include Pigment Red 122, Pigment Red 202, Pigment Red 209, Pigment Orange 48, Pigment Orange 49 and Pigment Violet 19. Among these chromatic color pigments, most preferred is Pigment Red 122.

Examples of the extender pigment include silica, calcium carbonate, talc and the like.

The aforementioned pigments may be used alone or in the form of a mixture of any two or more thereof.

As the suitable configuration of the pigment used in the present invention, there may be mentioned self-dispersible pigment particles, and pigment particles formed by incorporating the pigment into the polymer dispersant. From the viewpoint of improving image density and substrate-adhesion properties of the resulting ink, preferred is the configuration of pigment particles formed by incorporating the pigment into the polymer dispersant, i.e., pigment-containing polymer particles A. The "pigment-containing polymer particles A" as used in the present specification are intended to include those particles having a configuration in which the pigment is incorporated in the polymer dispersant, a configuration in which the pigment is partially exposed onto the surface of respective particles formed of the polymer dispersant and the pigment, a configuration in which the polymer dispersant is adsorbed onto a part of the pigment, and the like.

The pigment-containing polymer particles A are maintained in the ink of the present invention in such a condition that the particles having a particle size of not more than 200 nm are dispersed in the ink.

<Polymer Dispersant>

The polymer dispersant has a capability of dispersing the pigment in a medium containing water as a main component, and is preferably used as a component constituting the pigment-containing polymer particles A. A polymer constituting the polymer dispersant (hereinafter also referred to merely as a "polymer a") may be either a water-soluble polymer or a water-insoluble polymer. Of these polymers, preferred is the water-insoluble polymer. That is, the pigment is preferably in the form of pigment-containing water-insoluble polymer particles.

The "water-insoluble polymer" as used herein means such a polymer that when the polymer is dried to a constant weight at 105°C for 2 hours and then dissolved in 100 g of water at 25°C until reaching a saturated concentration thereof, the solubility in water of the polymer is less than 10 g. The solubility in water of the water-insoluble polymer is preferably not more than 5 g and more preferably not more than 1 g. In the case where the water-insoluble polymer is in the form of an anionic polymer, the aforementioned solubility means a solubility in water of the polymer whose anionic groups are neutralized completely (i.e., 100%) with sodium hydroxide.

The pigment-containing polymer particles A are preferably in the form of polymer particles crosslinked with a crosslinking agent as described hereinlater. In this case, even though the polymer used is a water-soluble polymer, the polymer is transformed into a water-insoluble polymer by crosslinking the polymer with the crosslinking agent.

The ionic group contained in a molecule of the polymer a is preferably introduced into a polymer skeleton thereof by an ionic monomer (a-1) from the viewpoint of improving dispersion stability of the pigment-containing polymer particles A and storage stability of the resulting ink. More specifically, it is preferred that the polymer a contains a constitutional unit derived from the ionic monomer (a-1). Examples of the polymer a include a vinyl-based resin, a polyester-based resin, a polyurethane-based resin and the like.

Among these resins, preferred is the vinyl-based resin, and more preferred is the vinyl-based resin that is produced by copolymerizing a raw material monomer (a) containing the ionic monomer (a-1) and a hydrophobic monomer (a-2).

The vinyl-based resin preferably contains a constitutional unit derived from the component (a-1) and a constitutional unit derived from the component (a-2). The vinyl-based resin may further contain a constitutional unit derived from a nonionic monomer (a-3) from the viewpoint of improving dispersion stability, fixing properties, etc., of the pigment-containing polymer particles A.

[Ionic Monomer (a-1)]

As the ionic monomer (a-1), there may be mentioned an anionic monomer and a cationic monomer. Among these monomers, preferred is an anionic monomer, more preferred is a monomer containing an acid group, and even more preferred is a monomer containing a carboxy group.

Specific examples of the ionic monomer (a-1) include those monomers described in the paragraph [0017] of JP 2018-80255A. Among these monomers, preferred is at least one monomer selected from the group consisting of acrylic acid and methacrylic acid.

[Hydrophobic Monomer (a-2)]

The term "hydrophobic" of the hydrophobic monomer (a-2) as used in the present invention means that a solubility in water of the monomer as measured by dissolving the monomer in 100 g of ion-exchanged water at 25°C until reaching a saturation concentration thereof is less than 10 g. The solubility in water of the hydrophobic monomer (a-2) is preferably not more than 5 g and more preferably not more than 1 g from the viewpoint of improving fixing properties to the pigment.

As the hydrophobic monomer (a-2), there may be mentioned an alkyl (meth)acrylate, an aromatic ring-containing monomer and a macromonomer. Among these monomers, preferred is at least one monomer selected from the group consisting of an alkyl (meth)acrylate and an aromatic ring-containing monomer, and more preferred is an aromatic ring-containing monomer.

Specific examples of the hydrophobic monomer (a-2) include those monomers described in the paragraphs [0018] to [0021] of JP 2018-80255A. Among these monomers, preferred is at least one monomer selected from the group consisting of styrene, $\alpha$-methyl styrene and benzyl (meth)acrylate.

[Nonionic Monomer (a-3)]

As the nonionic monomer (a-3), there may be mentioned a polyalkylene glycol (meth)acrylate and the like.

Specific examples the nonionic monomer (a-3) include those monomers described in the paragraphs [0022] and [0023] of JP 2018-80255A.

(Contents of Respective Components in Raw Material Monomer (a) or Contents of Respective Constitutional Units in Vinyl-Based Resin)

The contents of the components (a-1), (a-2) and (a-3) in the raw matrial monomer (a) containing these components (contents of non-neutralized components; hereinafter defined in the same way) upon production of the vinyl-based resin, or the contents of the constitutional unit derived from the component (a-1), the constitutional unit derived from the component (a-2) and the constitutional unit derived from the component (a-3) in the vinyl-based resin are as follows, from the viewpoint of improving dispersion stability of the pigment-containing polymer particles A.

The content of the component (a-1) is preferably not less than 10% by mass, more preferably not less than 20% by mass and even more preferably not less than 30% by mass, and is also preferably not more than 60% by mass, more preferably not more than 50% by mass and even more preferably not more than 40% by mass.

The content of the component (a-2) is preferably not less than 30% by mass, more preferably not less than 40% by mass and even more preferably not less than 50% by mass, and is also preferably not more than 90% by mass, more preferably not more than 80% by mass and even more preferably not more than 75% by mass.

In the case where the component (a-3) is included, the content of the component (a-3) is preferably not less than 5% by mass and more preferably not less than 10% by mass, and is also preferably not more than 30% by mass and more preferably not more than 20% by mass.

The mass ratio of the component (a-1) to the component (a-2) [(a-1)/(a-2)] is preferably not less than 0.2, more preferably not less than 0.25 and even more preferably not less than 0.3, and is also preferably not more than 1.2, more preferably not more than 1.0 and even more preferably not more than 0.8.

Incidentally, the contents of the constitutional units derived from the components (a-1), (a-2) and (a-3) in the vinyl-based resin used in the present inventin not only may be determined by actual measurements thereof, but also may be indicated by substitution of respective charging ratios of the components (a-1), (a-2) and (a-3) in the raw material monomer (a) containing these components upon production of the vinyl-based resin therefor. Among these components, the content of the component (a-1) may be suitably determined by potentiometric titration, whereas the contents of the components (a-2) and (a-3) may be suitably indicated by substitution of the respective charging ratios of the components (a-2) and (a-3) in the raw material monomer therefor.

(Production of Vinyl-Based Resin)

The vinyl-based resin may be produced by copolymerizing the raw material monomer (a) by conventionally known polymerization methods such as a bulk polymerization method, a solution polymerization method, a suspension polymerization method, an emulsion polymerization method, etc. Among these polymerization methods, preferred is the solution polymerization method.

The solvent used in the solution polymerization method is not particularly limited, and is preferably an organic polar solvent. Examples of the organic polar solvent include aliphatic alcohols having not less than 1 and not more than 3 carbon atoms; ketones having not less than 3 and not more than 5 carbon atoms; ethers; esters such as ethyl acetate, etc.; and the like. Among these organic polar solvents, preferred is ethanol, acetone, methyl ethyl ketone or a mixed solvent of at least one of these compounds with water, and more preferred is methyl ethyl ketone or a mixed solvent of methyl ethyl ketone and water.

The polymerization may be carried out in the presence of a polymerization initiator or a polymerization chain transfer agent.

Examples of the polymerization initiator include conventionally known polymerization initiators, e.g., azo compounds such as 2,2'-azobisisobutyronitrile, 2,2'-azobis(2,4-dimethylvaleronitrile), etc., organic peroxides such as *tert*-butyl peroxyoctoate, benzoyl peroxide, etc.; and the like. The amount of the radical polymerization initiator used in the polymerization is preferably not less than 0.001 mol and not more than 5 mol, and more preferably not less than 0.01 mol and not more than 2 mol, per 1 mol of the raw material monomer (a).

Examples of the polymerization chain transfer agent include conventionally known polymerization chain transfer agents, e.g., carboxy group-containing mercaptans such as 2-mercaptopropionic acid, etc.; alkyl mercaptans such as octanethiol, etc.; hydroxy group-containing mercaptans such as 2-mercaptoethanol, 3-mercapto-1,2-propanediol, etc.; and the like.

In addition, the type of a polymerization chain of the monomer polymerized is not particularly limited, and may be of any of a random type, a block type, a grafted type, etc.

The preferred polymerization conditions may vary depending upon the kinds of polymerization initiators, monomers and solvents used, etc. In general, the polymerization temperature is preferably not lower than 30°C and more preferably not lower than 50°C, and is also preferably not higher than 95°C and more preferably not higher than 80°C. The polymerization time is preferably not less than 1 hour and more preferably not less than 2 hours, and is also preferably not more than 20 hours and more preferably not more than 10 hours. Furthermore, the polymerization is preferably conducted in a nitrogen gas atmosphere or an atmosphere of an inert gas such as argon, etc.

After completion of the polymerization reaction, the polymer produced may be isolated from the obtained reaction solution by known methods such as reprecipitation, removal of the solvent by distillation, etc. In addition, the resulting polymer may be purified by removing the unreacted monomers, etc., from the polymer by reprecipitation, membrane separation, chromatography, extraction, etc.

The number-average molecular weight of the vinyl-based resin is preferably not less than 2,000 and more preferably not less than 5,000, and is also preferably not more than 20,000 and more preferably not more than 18,000, from the viewpoint of improving adsorptivity of the resin to the pigment and dispersion stability of the pigment.

The number-average molecular weight may be measured by the method described in Examples below.

[Production of Pigment-Containing Polymer Particles A]

The pigment-containing polymer particles A may be efficiently produced in the form of a pigment water dispersion thereof by a process including the following steps 1 and 2.

In addition, from the viewpoint of improving image density and substrate-adhesion properties of the resulting ink, it is preferred that the aforementioned process further includes the step 3 (crosslinking step).

Step 1: subjecting a pigment mixture containing the pigment, the polymer a as a polymer constituting the polymer dispersant, an organic solvent and water to dispersion treatment to obtain a dispersion treatment product;
Step 2: removing the organic solvent from the dispersion treatment product obtained in the step 1 to obtain a water dispersion of pigment-containing polymer particles a1 (hereinafter also referred to merely as a "pigment water dispersion (i)"); and

Step 3: adding a crosslinking agent to the pigment water dispersion (i) obtained in the step 2 to subject a part or whole of the pigment-containing polymer particles a1 to crosslinking reaction, thereby obtaining a water dispersion (I) of pigment-containing polymer particles a2 (hereinafter also referred to merely as a "pigment water dispersion (I)").

The pigment-containing polymer particles A according to the present invention include the pigment-containing polymer particles a1 and the pigment-containing polymer particles a2.

(Step 1)

The pigment mixture used in the step 1 is preferably obtained by the method in which the polymer a is first dissolved in the organic solvent, and then the pigment and water are added and mixed, if required together with a neutralizing agent, a surfactant, etc., into the resulting organic solvent solution to prepare a dispersion liquid of an oil-in-water type. The order of addition of the respective components to the organic solvent solution of the polymer a is not particularly limited, and it is preferred that water, the neutralizing agent and the pigment are sequentially added thereto in this order.

The organic solvent used in the step 1 is not particularly limited. Examples of the preferred organic solvent used in the step 1 include ketones, ethers, esters, aliphatic alcohols having not less than 1 and not more than 3 carbon atoms, and the like. Among these organic solvents, from the viewpoint of improving wettability to the pigment, solubility of the polymer a therein and adsorptivity to the pigment, more preferred are ketones having not less than 4 and not more than 8 carbon atoms, even more preferred are methyl ethyl ketone and methyl isobutyl ketone, and further even more preferred is methyl ethyl ketone. In the case where the vinyl-based resin as the polymer a is synthesized by a solution polymerization method, the solvent used in the solution polymerization method may be directly used as such in the step 1.

The mass ratio of the organic solvent to the polymer a [organic solvent/polymer a] in the pigment mixture is preferably not less than 0.5, more preferably not less than 0.8 and even more preferably not less than 1, and is also preferably not more than 2.5, more preferably not more than 2 and even more preferably not more than 1.5, from the viewpoint of improving wettability and adsorptivity to the pigment and solubility of the polymer a in the organic solvent.

In the case where the polymer a contains acid groups, it is preferred that the acid groups are at least partially neutralized using a neutralizing agent. It is considered that by neutralizing the acid groups of the polymer a, electric repulsion force between the pigment particles which is exhibited after the neutralization tends to become large, so that it is possible to suppress flocculation of the pigment-containing polymer particles A in the ink of the present invention, prevent increase in viscosity of the ink, and improve dispersion stability of the pigment-containing polymer particles A and storage stability of the resulting ink.

When neutralizing the acid groups of the polymer a, the neutralization is preferably conducted such that the pH value of the resulting dispersion falls within the range of not less than 7 and not more than 11.

Examples of the neutralizing agent include bases such as lithium hydroxide, sodium hydroxide, potassium hydroxide, ammonia, various amines and the like. Among these neutralizing agents, preferred are sodium hydroxide and ammonia.

The aforementioned neutralizing agents may be used alone or in the form of a mixture of any two or more thereof. In addition, the polymer a may be previously neutralized.

The equivalent of the neutralizing agent used is preferably not less than 10 mol%, more preferably not less than 20 mol% and even more preferably not less than 30 mol%, and is also preferably not more than 150 mol%, more preferably not more than 120 mol% and even more preferably not more than 100 mol%, from the viewpoint of improving storage stability of the resulting ink.

The equivalent of the neutralizing agent used as defined herein may be calculated according to the following formula wherein the polymer a before being neutralized is expressed by a polymer a'.

Equivalent (mol%) of neutralizing agent used = [{mass (g) of neutralizing agent added/equivalent of neutralizing agent}/[{acid value (mgKOH/g) of polymer a' x mass (g) of polymer a'}/(56 x 1,000)]] x 100.

In the dispersion treatment of the step 1, the pigment may be atomized into fine particles having a desired particle size only by substantial dispersion treatment in which a shear stress is applied to the pigment particles. However, it is preferred that the pigment mixture is first subjected to preliminary dispersion treatment, and then further to the substantial dispersion treatment, from the viewpoint of obtaining a uniform pigment water dispersion.

Examples of a disperser used in the preliminary dispersion treatment include ordinarily used mixing and stirring devices such as an anchor blade, a disper blade, etc.

Examples of the means for applying a shear stress to the pigment particles as used in the substantial dispersion treatment include kneading machines such as roll mills, kneaders, etc.; high-pressure homogenizers such as "Microfluidizer", etc.; and media-type dispersers such as paint shakers, beads mills, etc. Among these devices, the high-pressure homogenizers are preferably used from the viewpoint of reducing the particle size of the pigment.

(Step 2)

The step 2 is the step of removing the organic solvent from the dispersion treatment product obtained in the step 1 to obtain a pigment water dispersion (i). The removal of the organic solvent from the dispersion treatment product may be conducted by conventionally known methods. The organic solvent is preferably substantially completely removed from the thus obtained pigment water dispersion (i). However, the residual organic solvent may be present in the pigment water dispersion (i) unless the objects and advantageous effects of the present invention are adversely affected by the residual organic solvent. The content of the residual organic solvent in the pigment water dispersion (i) is preferably not more than 0.1% by mass and more preferably not more than 0.01% by mass.

(Step 3)

The step 3 is the step of adding a crosslinking agent to the pigment water dispersion (i) obtained in the step 2 to subject the pigment-containing polymer particles a1 to crosslinking reaction, thereby obtaining a pigment water dispersion (I) containing pigment-containing polymer particles a2.

In the step 3, carboxy groups of the polymer a constituting the pigment-containing polymer particles a1 are partially or wholly crosslinked to form a crosslinked structure in a part or whole of the pigment-containing polymer particles a1. It is considered that by forming such a crosslinked structure, the polymer is firmly adsorbed or fixed onto the surface of the pigment, and the pigment is inhibited from suffering from flocculation thereof, so that the resulting ink can be further improved in image density and substrate-adhesion properties.

(Crosslinking Agent)

As the crosslinking agent, from the viewpoint of efficiently conducting the crosslinking reaction as well as from the viewpoint of improving storage stability of the resulting ink, preferred is a compound containing not less than 2 and not more than 6, preferably not more than 4, epoxy groups in a molecule thereof, more preferred is a compound containing not less than 2 glycidyl ether groups in a molecule thereof, and even more preferred is a polyglycidyl ether compound of a polyhydric alcohol containing a hydrocarbon group having not less than 3 and not more than 8 carbon atoms in a molecule thereof.

The molecular weight of the crosslinking agent is preferably not less than 120, more preferably not less than 150 and even more preferably not less than 200, and is also preferably not more than 2,000, more preferably not more than 1,500 and even more preferably not more than 1,000, from the viewpoint of facilitating the crosslinking reaction as well as from the viewpoint of improving storage stability of the resulting ink.

The epoxy equivalent of the crosslinking agent is preferably not less than 90, more preferably not less than 100 and even more preferably not less than 110, and is also preferably not more than 300, more preferably not more than 200 and even more preferably not more than 150.

From the viewpoint of efficiently conducting the crosslinking reaction of the carboxy groups of the polymer a with the crosslinking agent in a medium containing water as a main component, the water solubility rate of the crosslinking agent is preferably not more than 50% by mass, more preferably not more than 40% by mass and even more preferably not more than 35% by mass. The "water solubility rate" of the crosslinking agent as used herein means a rate (% by mass) of dissolution of the crosslinking agent as measured by dissolving 10 parts by mass of the crosslinking agent in 90 parts by mass of water at room temperature (25°C).

Specific examples of the crosslinking agent include polyglycidyl ethers such as polypropylene glycol diglycidyl ether (water solubility rate: 31% by mass), glycerol polyglycidyl ether, polyglycerol polyglycidyl ether, trimethylolpropane polyglycidyl ether (water solubility rate: 27% by mass), sorbitol polyglycidyl ether, pentaerythritol polyglycidyl ether (water solubility rate: 0% by mass), resorcinol diglycidyl ether, neopentyl glycol diglycidyl ether, 1,6-hexanediol diglycidyl ether, hydrogenated bisphenol A-type diglycidyl ethers, etc., and the like. Of these crosslinking agents, preferred is at least one compound selected from the group consisting of trimethylolpropane polyglycidyl ether and pentaerythritol polyglycidyl ether, and more preferred is trimethylolpropane polyglycidyl ether.

The crosslinking rate of the polymer in the step 3 as calculated in terms of a ratio of a mole equivalent number of crosslinkable functional groups of the crosslinking agent to a mole equivalent number of the carboxy groups of the polymer a is preferably not less than 10 mol%, more preferably not less than 20 mol%, even more preferably not less than 30 mol% and further even more preferably not less than 40 mol%, and is also preferably not more than 80 mol%, more preferably not more than 70 mol% and even more preferably not more than 60 mol%, from the viewpoint of improving storage srtability of the resulting ink.

From the same viewpoint as described above, the temperature used in the crosslinking treatment is preferably not lower than 40°C, more preferably not lower than 50°C and even more preferably not lower than 60°C, and is also preferably not higher than 95°C, more preferably not higher than 85°C and even more preferably not higher than 75°C.

From the viewpoint of completing the crosslinking reaction and attaining good cost efficiency, the time of the crosslinking treatment is preferably not less than 0.5 hour, more preferably not less than 1 hour and even more preferably not less than 1.5 hours, and is also preferably not more than 12 hours, more preferably not more than 10 hours, even more preferably not more than 8 hours and further even more preferably not more than 5 hours.

The solid content of the pigment water dispersion (I) is preferably not less than 10% by mass and more preferably not less than 15% by mass, and is also preferably not more than 40% by mass and more preferably not more than 35% by mass, from the viewpoint of improving dispersion stability of the pigment water dispersion (I) as well as from the viewpoint of facilitating production of the ink. The solid content may be measured by the method described in Examples below.

The content of the pigment in the pigment water dispersion (I) is preferably not less than 5% by mass, more preferably not less than 7% by mass and even more preferably not less than 10% by mass, and is also preferably not more than 40% by mass, more preferably not more than 30% by mass and even more preferably not more than 20% by mass, from the viewpoint of improving dispersion stability of the pigment water dispersion.

The mass ratio of the pigment to the polymer a [pigment/polymer a] in the pigment water dispersion (I) is preferably not less than 50/50, more preferably not less than 55/45 and even more preferably not less than 60/40, and is also preferably not more than 90/10, more preferably not more than 85/15 and even more preferably not more than 80/20.

The average particle size of the pigment particles in the pigment water dispersion (I) is preferably not less than 40 nm, more preferably not less than 50 nm, even more preferably not less than 60 nm, further even more preferably not less than 70 nm and still further even more preferably not less than 80 nm, and is also preferably not more than 200 nm, more preferably not more than 170 nm, even more preferably not more than 150 nm, further even more preferably not more than 140 nm and still further even more preferably not more than 120 nm, from the viewpoint of improving storage stability of the resulting ink.

The average particle size may be measured by the method described in Examples below.

<Pigment-Free Water-Insoluble Polymer Particles B>

The ink of the present invention preferably further contains pigment-free polymer particles B as a fixing aid polymer from the viewpoint of improving substrate-adhesion properties of the resulting ink.

The pigment-free polymer particles B are preferably those polymer particles that are allowed to be present in the form of a dispersion thereof in a medium containing water as a main component.

A polymer constituting the pigment-free polymer particles B (hereinafter also referred to merely as a "polymer b") may be either a water-soluble polymer or a water-insoluble polymer. Of these polymers, preferred is the water-insoluble polymer.

The "water-insoluble polymer" as used herein has the same definition as described previously.

The polymer b and the polymer a may be different in composition from each other, or may be identical in properties including their compositions to each other, but different only in inclusion or non-inclusion of the pigment therein from each other

In the case where the ink contains the pigment-containing polymer particles A and the pigment-free polymer particles B, the content of the polymer in the ink means a total content of the polymer a and the polymer b therein.

The pigment-free polymer particles B may be in the form of polymer particles crosslinked with a crosslinking agent.

The polymer b is preferably at least one resin selected from the group consisting of an acrylic resin, a polyester resin and a polyurethane resin. Among these resins as the polymer b, more preferred is such an acrylic resin that contains a constitutional unit derived from (meth)acrylic acid (b-1) and a constitutional unit derived from a (meth)acrylic acid ester (b-2).

The (meth)acrylic acid (b-1) is preferably at least one compound selected from the group consisting of acrylic acid and methacrylic acid, and more preferably methacrylic acid, from the viewpoint of improving substrate-adhesion properties of the resulting ink.

As the (meth)acrylic acid ester (b-2), from the viewpoint of improving substrate-adhesion properties of the resulting ink, preferred is at least one compound selected from the group consisting of methyl (meth)acrylate, butyl (meth)acrylate, isobutyl (meth)acrylate, *tert*-butyl (meth)acrylate, 2-ethylhexyl (meth)acrylate and cyclohexyl (meth)acrylate, more preferred is at least one compound selected from the group consisting of methyl (meth)acrylate, butyl (meth)acrylate, 2-ethylhexyl (meth)acrylate and cyclohexyl (meth)acrylate, and even more preferred is 2-ethylhexyl (meth)acrylate.

The polymer b may also further contain a constitutional unit derived from a monomer other than the aforementioned (meth)acrylic acid (b-1) and (meth)acrylic acid ester (b-2). Examples of the other monomer include an ionic monomer other than (meth)acrylic acid, an aromatic group-containing hydrophobic monomer and a nonionic monomer. Among these other monomers, preferred is the aromatic group-containing hydrophobic monomer (b-3). Specific examples of such a hydrophobic monomer (b-3) include the aforementioned styrene-based monomer, an aromatic group-containing (meth)acrylate, an aromatic group-containing monomer-based macromonomer, and the like.

The contents of the constitutional units derived from the respective components in the polymer b are as follows, from the viewpoint of improving substrate-adhesion properties of the resulting ink.

The content of the constitutional unit derived from the (meth)acrylic acid (b-1) in the polymer b is preferably not less than 1% by mass, more preferably not less than 1.5% by mass and even more preferably not less than 2% by mass, and is also preferably not more than 20% by mass, more preferably not more than 10% by mass and even more preferably not more than 5% by mass.

The content of the constitutional unit derived from the (meth)acrylic acid ester (b-2) in the polymer b is preferably not less than 80% by mass, more preferably not less than 90% by mass and even more preferably not less than 95% by mass, and is also preferably not more than 99% by mass, more preferably not more than 98.5% by mass and even more preferably not more than 98% by mass.

The mass ratio of the (meth)acrylic acid (b-1) to the (meth)acrylic acid ester (b-2) [(meth)acrylic acid (b-1)/(meth)acrylic acid ester (b-2)] is preferably not less than 0.01 and more preferably not less than 0.02, and is also preferably not more than 0.5, more preferably not more than 0.2 and even more preferably not more than 0.1.

The weight-average molecular weight of the polymer b is preferably not less than 50,000, more preferably not less than 100,000 and even more preferably not less than 200,000, and is also preferably not more than 2,000,000, more preferably not more than 1,500,000 and even more preferably not more than 1,000,000, from the viewpoint of improving substrate-adhesion properties and storage stability of the resulting ink. The weight-average molecular weight may be measured by the method descried in Examples below.

The average particle size of the pigment-free polymer particles B is preferably not less than 20 nm, more preferably not less than 40 nm and even more preferably not less than 60 nm, and is also preferably not more than 150 nm, more preferably not more than 130 nm and even more preferably not more than 110 nm, from the viewpoint of improving substrate-adhesion properties and storage stability of the resulting ink. The average particle size may be measured by the method descried in Examples below.

[Production of Pigment-Free Polymer Particles B]

As the pigment-free polymer particles B, there may be used either an appropriately synthesized product or a commercially available product. The pigment-free polymer particles B are preferably used in the form of a water dispersion liquid thereof. Upon producing the water dispersion liquid of the pigment-free polymer particles B, the polymer b constituting the pigment-free polymer particles B is preferably neutralized with a neutralizing agent.

The water dispersion liquid of the pigment-free polymer particles B may be produced by such a method in which after obtaining the polymer b' as the polymer before the neutralization by conventionally known polymerization methods, a mixture containing the polymer b' and water, if required together with a neutralizing agent, is stirred while heating, followed by cooling the mixture, and the like.

The preferred constitutional units, contents of the constitutional units, properties and the like of the polymer b' as the polymer before the neutralization are the same as those of the aforementioned polymer b, and the polymer b' is preferably produced by the same polymerization method as used for production of the aforementioned vinyl-based resin.

The acid value of the polymer b' is preferably not less than 0 mgKOH/g, more preferably not less than 5 mgKOH/g, even more preferably not less than 10 mgKOH/g and further even more preferably not less than 15 mgKOH/g, and is also preferably not more than 200 mgKOH/g, more preferably not more than 100 mgKOH/g, even more preferably not more than 50 mgKOH/g and further even more preferably not more than 20 mgKOH/g.

The temperature used upon stirring the aforementioned mixture is preferably not lower than 60°C, more preferably not lower than 70°C and even more preferably not lower than 75°C, and is also preferably not higher than 100°C and more preferably not higher than 95°C. The stirring time is preferably not less than 0.5 hour and more preferably not less than 0.8 hour, and is also preferably not more than 10 hours and more preferably not more than 5 hours.

As the neutralizing agent used for producing the water dispersion liquid of the pigment-free polymer particles B, preferred are alkali metal hydroxides such as lithium hydroxide, sodium hydroxide, potassium hydroxide, etc., ammonia, organic amines, and the like, and more preferred are sodium hydroxide and triethanolamine.

The equivalent of the neutralizing agent used is not less than 0 mol%, preferably not less than 10 mol%, more preferably not less than 30 mol% and even more preferably not less than 50 mol%, and is also preferably not more than 160 mol%, more preferably not more than 130 mol% and even more preferably not more than 110 mol%, from the viewpoint of improving dispersion stability of the pigment-free polymer particles B. The equivalent of the neutralizing agent used may be determined by the aforementioned method.

[Production of Ink of the Present Invention]

The ink of the present invention may be efficiently produced by mixing the pigment water dispersion (I) and the below-mentioned water-soluble organic solvent, if required together with the water dispersion liquid of the pigment-free polymer particles B and a surfactant, and further with the other organic solvent(s). The method of mixing these components is not particularly limited.

<Water-Soluble Organic Solvent>

The water-soluble organic solvent used in the present invention may be present either in a liquid state or in a solid state as measured at 25°C. However, a solubility in water of the water-soluble organic solvent as measured by dissolving the organic solvent in 100 mL of water at 25°C is not less than 10 mL.

The water-soluble organic solvent used in the present invention contains a polypropylene glycol monoalkyl ether, and the content of the water-soluble organic solvent in the ink is not less than 29% by mass and not more than 35% by mass, from the viewpoint of improving image density and substrate-adhesion properties of the resulting ink.

The polypropylene glycol monoalkyl ether as used in the present invention means any of a propylene glycol monoalkyl ether, a dipropylene glycol monoalkyl ether, a tripropylene glycol monoalkyl ether and a mixture of these compounds.

The monoalkyl ether moiety of the polypropylene glycol monoalkyl ether is preferably at least one monoalkyl ether selected from the group consisting of monomethyl ether, monoethyl ether and monopropyl ether, and more preferably at least one monoalkyl ether selected from the group consisting of monomethyl ether and monopropyl ether.

Examples of the suitable polypropylene glycol monoalkyl ether include at least one compound selected from the group consisting of dipropylene glycol monomethyl ether (S1), dipropylene glycol monoethyl ether and dipropylene glycol monopropyl ether. Among these polypropylene glycol monoalkyl ethers, preferred is at least one compound selected from the group consisting of dipropylene glycol monomethyl ether (S1) and dipropylene glycol monopropyl ether, and more preferred is dipropylene glycol monomethyl ether (S1). In the water-soluble organic solvent of the present invention, a content of dipropylene glycol monomethyl ether (S1) is not less than 75% by mass and not more than 96% by mass.

The ink of the present invention may also contain an organic solvent other than the aforementioned water-soluble organic solvent, if required. Examples of the organic solvent other than the aforementioned water-soluble organic solvent include an alkanediol having not less than 4 and not more than 6 carbon atoms, a polyhydric alcohol, a polyhydric alcohol alkyl ether, a nitrogen-containing heterocyclic compound, an amide, an amine, and the like.

Examples of the alkanediol having not less than 4 and not more than 6 carbon atoms include 1,2-butanediol, 1,4-butanediol, 1,2-hexanediol, 1,6-hexanediol, dipropylene glycol, and the like.

Examples of the polyhydric alcohol alkyl ether include ethylene glycol monoethyl ether, ethylene glycol monoisopropyl ether, ethylene glycol monopropyl ether, ethylene glycol monobutyl ether, tetraethylene glycol monomethyl ether, tripropylene glycol monobutyl ether, and the like.

The ink of the present invention preferably contains a surfactant from the viewpoint of improving wettability of the ink to a printing medium. In addition, the ink may also contain various additives that may be usually used in inks, such as a viscosity modifier, a defoaming agent, an antiseptic agent, a mildew-proof agent, a rust preventive, etc.

(Surfactant)

The surfactant is preferably a nonionic surfactant. From the viewpoint of maintaining adequate surface tension of the ink to thereby improve wettability of the ink to a printing medium, the surfactant is more preferably at least one surfactant selected from the group consisting of an acetylene glycol-based surfactant and a silicone-based surfactant, and it is even more preferred that the acetylene glycol-based surfactant and the silicone-based surfactant are used in combination with each other.

(Acetylene Glycol-Based Surfactant)

Examples of the acetylene glycol-based surfactant include acetylene-based diols such as 2,4,7,9-tetramethyl-5-decyne-4,7-diol, 3,6-dimethyl-4-octyne-3,6-diol, 3,5-dimethyl-1-hexyne-3-ol, 2,4-dimethyl-5-hexyne-3-ol, 2,5-dimethyl-3-hexyne-2,5-diol, 2,5,8,11-tetramethyl-6-dodecyne-5,8-diol, etc., and ethyleneoxide adducts of these compounds.

The sum (n) of an average molar number of addition of ethyleneoxide groups (EO) in the aforementioned ethyleneoxide adducts is preferably not less than 1 and more preferably not less than 1.5, and is also preferably not more than 20 and more preferably not more than 10.

Examples of commercially available products of the acetylene glycol-based surfactant include "SURFYNOL" series products and "OLFINE" series products both available from Nissin Chemical Co., Ltd., and "ACETYLENOL" series products available from Kawaken Fine Chemicals Co., Ltd., and the like. Of these commercially available products of the acetylene glycol-based surfactant, preferred are "SURFYNOL 420" (n: 1.3), "SURFYNOL 440" (n: 3.5), "SURFYNOL 465" (n: 10.0), "SURFYNOL 485" (n: 30.0), "OLFINE E1010", "ACETYLENOL E100", "ACETYLENOL E200", "ACETYLENOL E40" (n: 4), "ACETYLENOL E60" (n: 6), "ACETYLENOL E81" (n: 8), "ACETYLENOL E100" (n: 10), and the like.

(Silicone-Based Surfactant)

Examples of the silicone-based surfactant include dimethyl polysiloxane, a polyether-modified silicone, an amino-modified silicone, a carboxy-modified silicone, and the like. Of these silicone-based surfactants, from the same viewpoint as described above, preferred is the polyether-modified silicone.

The polyether-modified silicone-based surfactant has such a structure that a hydrocarbon group bonded to a side chain and/or a terminal end of a silicone oil is substituted with a polyether group. Examples of the suitable polyether group include a polyethyleneoxy group, a polypropyleneoxy group and a polyalkyleneoxy group formed by addition-bonding an ethyleneoxy group (EO) and a propyleneoxy group (PO) to each other in a block form or a random form. More specifically, as the polyether-modified silicone-based surfactant, there may be used a compound formed by grafting a polyether group to a main chain of a silicone, a compound formed by bonding a silicone and a polyether group to each other in a block form, and the like.

The HLB (hydrophile lipophile balance) value of the polyether-modified silicone-based surfactant is preferably not less than 2, more preferably not less than 3 and even more preferably not less than 4 from the viewpoint of improving solubility of the polyether-modified silicone-based surfactant in the ink. The HLB value as used herein may be measured by a Griffin method.

In addition, the kinematic viscosity of the polyether-modified silicone-based surfactant as measured at 25°C is preferably not less than 50 $mm^2$/s and more preferably not less than 80 $mm^2$/s, and is also preferably not more than 500 $mm^2$/s and more preferably not more than 300 $mm^2$/s. Meanwhile, the kinematic viscosity may be measured using a Ubbelohde viscometer.

Specific examples of commercially available products of the polyether-modified silicone-based surfactant include "KF" series products available from Shin-Etsu Chemical Co., Ltd., such as "KF-353", "KF-355A", "KF-642", etc.; "SILFACE SAG005" available from Nissin Chemical Co., Ltd.,; "FZ-2191" available from NUC Co., Ltd.; "BYK-348" available from BYK Chemie Japan K.K.; and the like.

The contents of the respective components in the ink of the present invention as well as properties of the ink are as follows.

(Content of Pigment)

The content of the pigment in the ink of the present invention is preferably not less than 1% by mass, more preferably not less than 3% by mass and even more preferably not less than 4% by mass from the viewpoint of enhancing optical density of the resulting ink, and is also preferably not more than 15% by mass, more preferably not more than 10% by mass and even more preferably not more than 7% by mass from the viewpoint of reducing viscosity of the ink upon volatilizing the solvent therefrom as well as from the viewpoint of improving storage stability of the resulting ink.

(Content of Pigment-Containing Polymer Particles A)

The content of the pigment-containing polymer particles A in the ink of the present invention is preferably not less than 3% by mass, more preferably not less than 4% by mass and even more preferably not less than 5% by mass from the viewpoint of enhancing optical density of the resulting ink, and is also preferably not more than 15% by mass, more preferably not more than 13% by mass and even more preferably not more than 10% by mass from the viewpoint of improving storage stability of the resulting ink.

(Content of Pigment-Free Polymer Particles B)

The content of the pigment-free polymer particles B in the ink of the present invention is preferably not less than 0.5% by mass, more preferably not less than 1% by mass and even more preferably not less than 2% by mass, and is also preferably not more than 8% by mass, more preferably not more than 7% by mass and even more preferably not more than 6% by mass, from the viewpoint of improving substrate-adhesion properties of the resulting ink.

The total content of the polymer a and the polymer b in the ink of the present invention is preferably not less than 1% by mass, more preferably not less than 2% by mass and even more preferably not less than 3% by mass, and is also preferably not more than 10% by mass, more preferably not more than 9% by mass and even more preferably not more than 8% by mass, from the viewpoint of improving substrate-adhesion properties of the resulting ink.

(Content of Water-Soluble Organic Solvent)

The content of the water-soluble organic solvent in the ink of the present invention is not less than 29% by mass, and is also not more than 35% by mass, from the viewpoint of improving image density and substrate-adhesion properties of the resulting ink.

In addition, the content of dipropylene glycol monomethyl ether (S1) in the water-soluble organic solvent is not less than 75% by mass and preferably not less than 78% by mass, and is also not more than 96% by mass and preferably not more than 95% by mass, from the viewpoint of improving image density and substrate-adhesion properties of the resulting ink.

(Content of Surfactant)

The content of the surfactant in the ink of the present invention is preferably not less than 0.1% by mass, more preferably not less than 0.2% by mass and even more preferably not less than 0.5% by mass, and is also preferably not more than 5% by mass, more preferably not more than 4% by mass and even more preferably not more than 3% by mass, from the viewpoint of improving wettability of the ink to a printing medium.

The content of the acetylene glycol-based surfactant in the ink of the present invention is preferably not less than 0.2% by mass, more preferably not less than 0.4% by mass and even more preferably not less than 0.6% by mass, and is also preferably not more than 4% by mass, more preferably not more than 3% by mass and even more preferably not more than 2% by mass, from the same viewpoint as described above.

The content of the silicone-based surfactant in the ink of the present invention is preferably not less than 0.01% by mass, more preferably not less than 0.03% by mass and even more preferably not less than 0.05% by mass, and is also preferably not more than 3% by mass, more preferably not more than 2% by mass and even more preferably not more than 1% by mass, from the same viewpoint as described above.

(Content of Water)

The content of water in the ink of the present invention is preferably not less than 30% by mass, more preferably not less than 40% by mass and even more preferably not less than 50% by mass, and is also preferably not more than 90% by mass, more preferably not more than 80% by mass and even more preferably not more than 70% by mass, from the viewpoint of improving image density and substrate-adhesion properties of the resulting ink.

(Mass Ratio of (Pigment-Containing Polymer Particles A/Whole Water-Soluble Organic Solvents))

The mass ratio of the pigment-containing polymer particles A to the whole water-soluble organic solvents (pigment-containing polymer particles A/whole water-soluble organic solvents) is preferably not less than 0.05, more preferably not less than 0.1 and even more preferably not less than 0.12, and is also preferably not more than 0.5, more preferably not more than 0.45 and even more preferably not more than 0.4, from the viewpoint of improving image density and substrate-adhesion properties of the resulting ink.

(Properties of Ink of the Present Invention)

The viscosity of the ink of the present invention as measured at 32°C is preferably not less than 2 mPa • s, more preferably not less than 3 mPa • s and even more preferably not less than 5 mPa • s, and is also preferably not more than 12 mPa • s, more preferably not more than 9 mPa • s and even more preferably not more than 7 mPa • s, from the viewpoint of improving image density and substrate-adhesion properties of the resulting ink.

The pH value of the ink of the present invention is preferably not less than 7.0, more preferably not less than 7.2 and even more preferably not less than 7.5, and is also preferably not more than 11, more preferably not more than 10 and even more preferably not more than 9.5, from the viewpoint of improving storage stability of the resulting ink as well as from the viewpoint of improving the resistance of members to the ink and suppressing skin irritation.

The ink of the present invention is especially suitably used in printing for soft packaging. Incidentally, the term "printing for soft packaging" as used therein means such a printing operation that is conducted on a single member formed of a thin flexible material, such as a resin film, etc., or a laminated member formed thereof. The printed material obtained by conducting the printing for soft packaging using the ink of the present invention is suitably used in the applications of packaging of foods, living wares, etc.

The inks of the present invention are preferably used in combination with each other to provide a set of the inks, which can be suitably used for full color printing.

[Ink-Jet Printing Method]

The ink-jet printing method of the present invention is a method of printing characters or images on a low-liquid absorbing printing medium using the ink of the present invention. In the ink-jet printing method, the ink of the present invention is loaded to a conventionally known ink-jet printing apparatus from which droplets of the ink are ejected onto the low-liquid absorbing printing medium to print characters or images, etc., on the printing medium.

(Low-Liquid Absorbing Printing Medium)

Examples of the low-liquid absorbing printing medium include printing media formed of a metal, a synthetic resin, a low-liquid absorbing coated paper, an art paper, etc.

Examples of the metal include iron, an iron alloy, aluminum, an aluminum alloy, and the like. Among these metals, preferred are aluminum and an aluminum alloy. In addition, as the metal, there are also preferably used a metal foil or a metal plate which is subjected to various surface treatments, and a laminate formed by coating a metal with a resin film formed of a polyester, a polyolefin, etc.

Examples of the synthetic resin include polyvinyl chloride, polymethyl methacrylate, polyethylene terephthalate, polybutylene terephthalate, polypropylene, polystyrene, polyamide, an acrylonitrile-butadiene-styrene copolymer, an acrylonitrile-styrene copolymer, polycarbonate, a polymer alloy of PC and ABS (50/50), triacetyl cellulose, and the like. In addition, there are also preferably used those synthetic resins that are subjected to corona discharge treatment or biaxial orientation treatment. Among these synthetic resins, preferred are polyester resins such as polyvinyl chloride, polyethylene terephthalate, etc., polypropylene, and the like.

Upon conducting the ink-jet printing, the surface of the printing medium is preferably heated to a temperature range of not lower than 30°C and not higher than 100°C according to a material thereof, from the viewpoint of improving substrate-adhesion properties of the resulting ink.

When using a resin film as the printing medium, the surface temperature of the printing medium is preferably not lower than 35°C and more preferably not lower than 40°C, and is also preferably not higher than 80°C and more preferably not higher than 75°C, whereas when using a metal foil as the printing medium, the surface temperature of the printing medium is preferably not lower than 50°C and more preferably not lower than 60°C, and is also preferably not higher than 95°C and more preferably not higher than 90°C.

As the method of heating the printing medium, there may be used conventionally known methods such as a method of irradiating the printing medium with infrared rays, a method of exposing the printing medium to an atmosphere heated by an oven, etc., a method of bringing the printing medium into contact with a heated body such as a heated metal, etc.

EXAMPLES

In the following Production Examples, Preparation Examples, Examples and Comparative Examples, the "part(s)" and "%" indicate "part(s) by mass" and "% by mass", respectively, unless otherwise specified. Incidentally, the respective properties, etc., were measured by the following methods.

(1) Measurement of Number-Average Molecular Weight and Weight-Average Molecular Weight of Polymer

The number-average molecular weight and weight-average molecular weight of the polymer were measured by gel permeation chromatography [GPC apparatus: "HLC-8320GPC" available from Tosoh Corporation; columns: "TSKgel Super AWM-H", "TSKgel Super AW3000" and "TSKgel guardcolumn Super AW-H" all available from Tosoh Corporation; flow rate: 0.5 mL/min] using a solution prepared by dissolving phosphoric acid and lithium bromide in $N,N$-dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

As a sample to be measured, there was used a dispersion prepared by mixing 0.1 g of the polymer with 10 mL of the aforementioned eluent in a glass vial, stirring the resulting mixture with a magnetic stirrer at 25°C for 10 hours, and then subjecting the mixture to filtration treatment through a syringe filter "DISMIC-13HP" (formed of PTFE; 0.2 $\mu$m) available from Advantec Co., Ltd.

(2) Measurement of Average Particle Sizes of Pigment-Containing Polymer Particles A and Pigment-Free Polymer Particles B

The cumulant analysis of the particles was conducted using a laser particle analyzing system "ELS-8000" available from Otsuka Electrics Co., Ltd., to measure an average particle size thereof. In the measurement, there was used a dispersion liquid diluted with water such that a concentration of the particles to be measured in the dispersion liquid was adjusted to $5 \times 10^{-3}$% by weight (in terms of a solid content thereof). The measurement was conducted under the conditions including a temperature of 25°C, an angle between incident light and detector of 90° and a cumulative number of 100 times, and a refractive index of water (1.333) was input to the analyzing system as a refractive index of the dispersing medium. The thus measured cumulant average particle size was defined as respective average particle sizes of the pigment-containing polymer particles A and the pigment-free polymer particles B.

(3) Measurement of Solid Content

Using an infrared moisture meter "FD-230" available from Kett Electric Laboratory, 5 g of a sample to be measured was dried at a drying temperature of 150°C under a measuring mode 96 (monitoring time: 2.5 minutes/variation range: 0.05%), followed by measuring a water content (%) of the sample to be measured. The solid content of the sample was calculated according to the following formula.

$$\text{Solid Content (\%)} = 100 - \text{Water Content (\%) of Sample to be Measured}$$

(4) Measurement of Water Solubility Rate of Epoxy Compound

A glass tube (25 mm$\phi$ in diameter x 250 mm in height) was charged with 90 parts by mass of ion-exchanged water and 10 parts by mass (W1) of an epoxy compound at room temperature (25°C). The glass tube thus charged was allowed to stand for 1 hour in a thermostatic bath adjusted to a water temperature of 25°C. Next, the contents of the glass tube were vigorously shaken for 1 minute, and then the glass tube was placed again in the thermostatic bath and allowed to stand in the thermostatic bath for 12 hours. Then, undissolved components that were separated from water and precipitated or floated in the dispersion were recovered therefrom and then dried at 40°C under the environmental condition of a gauge pressure of -0.08 MPa for 6 hours, followed by measuring a mass (W2) of the thus dried product. The water solubility rate (% by mass) of the epoxy compound was calculated according to the following formula.

$$\text{Water Solubility Rate (\% by mass)} = \{(W1 - W2)/W1\} \times 100$$

(5) Measurement of Boiling Point of Organic Solvent

The boiling point of the organic solvent was measured according to JIS K2254, and an initial boiling point of the organic solvent thus meaured was defiend as the boiling point (bp) of the organic solvent.

Production Example 1 (Production of Solution of Water-Insoluble Polymer a)

A monomer mixed solution was prepared by mixing 84 parts of acrylic acid available from FUJIFILM Wako Pure Chemical Corporation, 108 parts of styrene available from FUJIFILM Wako Pure Chemical Corporation and 8 parts of $\alpha$-methyl styrene available from FUJIFILM Wako Pure Chemical Corporation with each other. A reaction vessel was charged with 20 parts of methyl ethyl ketone (MEK) available from FUJIFILM Wako Pure Chemical Corporation and 0.3 part of a polymerization chain transfer agent (2-mercaptoethanol) available from FUJIFILM Wako Pure Chemical Corporation as well as 10% of the monomer mixed solution prepared above, and then an inside atmosphere of the reaction vessel was fully replaced with nitrogen gas.

On the other hand, a mixed solution prepared by mixing remaining 90% of the monomer mixed solution, 0.27 part of the aforementioned polymerization chain transfer agent, 60 parts of MEK and 2.2 parts of an azo-based radical polymerization initiator "V-65" (2,2'-azobis(2,4-dimethylvaleronitrile)) available from FUJIFILM Wako Pure Chemical Corporation was charged into a dropping funnel. In a nitrogen atmosphere, the aforementioned monomer mixed solution in the reaction vessel was heated to 65°C while stirring, and then the mixed solution in the dropping funnel was added dropwise into the reaction vessel over 3 hours. After the elapse of 2 hours from completion of the dropwise addition while maintaining the resulting mixed solution at 65°C, a solution prepared by dissolving 0.3 part of the aforementioned polymerization initiator in 5 parts of MEK was added to the reaction vessel, and the resulting reaction solution was further aged at 65°C for 2 hours and then at 70°C for 2 hours, thereby obtaining a solution of a carboxy group-containing water-insoluble polymer a (number-average molecular weight of the polymer a: 10500).

Preparation Example 1 (Preparation of Water Dispersion of Pigment Red 122-Containing Polymer Particles A1)

(1) A polymer produced by drying the solution of the water-insoluble polymer a obtained in Production Example 1 under reduced pressure was weighed in an amount of 58.1 parts and mixed with 71.5 parts of MEK, and then 23.6 parts of a 5N sodium hydroxide aqueous solution (content of sodium hydroxide as solid components: 16.9%; for volumetric titration) available from FUJIFILM Wako Pure Chemical Corporation were further added to the resulting mixture to thereby neutralize the polymer such that the ratio of the number of moles of sodium hydroxide to the number of moles of carboxy groups of the polymer was 40 mol% (neutralization degree: 40 mol%). Moreover, 695.1 parts of ion-exchanged water were added to the resulting mixed solution, and 200 g of a pigment "CHROMOFINE RED 6111T" (tradename; C.I. Pigment Red 122: PR122) available from Dainichiseika Color & Chemicals Mfg. Co., Ltd., was further added to the mixed solution. The resulting dispersion was stirred at 20°C for 60 minutes using a disper "ULTRA DISPER" (tradename) available from Asada Iron Works Co., Ltd., while operating a disper blade thereof at a rotating speed of 7000 rpm.

The resulting mixture was subjected to dispersion treatment under a pressure of 150 MPa using "Microfluidizer" (tradename) available from Microfluidics Corporation by passing the mixture through the device 9 times.

(2) A 2 L eggplant-shaped flask was charged with 1000 g of the dispersion treatment product obtained in the above (1), and then 666.7 g of ion-exchanged water was added thereto (solid content: 15.0%). The resulting mixture was maintained under a pressure of 0.09 MPa for 3 hours in a warm water bath adjusted to 32°C using a rotary distillation apparatus "Rotary Evaporator N-1000S" available from Tokyo Rikakikai Co., Ltd., operated at a rotating speed of 50 rpm to remove the organic solvent therefrom. Moreover, the temperature of the warm water bath was adjusted to 62°C, and the pressure in the apparatus was reduced to 0.07 MPa, and the reaction solution was concentrated under this condition until a solid content of the obtained reaction solution reached 25.0%.

(3) The thus obtained concentrated solution was charged into a 500 mL-capacity angle rotor, and subjected to centrifugal separation using a high-speed cooling centrifuge "himac CR22G" (temperature set: 20°C) available from Hitachi Koki Co., Ltd., at 7000 rpm for 20 minutes. Thereafter, the liquid layer portion thus separated from the concentrated solution was subjected to filtration treatment through a 5 μm-mesh membrane filter "Minisart" available from Sartorius Inc.

Four hundred grams of the resulting filtrate (PR122: 76.0 g; the aforementioned water-insoluble polymer a: 22.1 g) were mixed with 61.61 g of ion-exchanged water and then with 1.08 g of "Ploxel LVS" (mildew-proof agent; active ingredient content: 20%) available from Arch Chemicals Japan, Inc., and further mixed with 4.86 g of a crosslinking agent "DENACOL EX-321L" (trimethylolpropane polyglycidyl ether; epoxy equivalent: 129; water solubility rate: 27%) available from Nagase ChemteX Corporation, followed by stirring the resulting mixture at 70°C for 3 hours. The obtained reaction solution was cooled to 25°C, and then subjected to filtration treatment through the aforementioned 5 μm-mesh filter. Furthermore, the obtained filtered product was mixed with ion-exchanged water so as to adjust a solid content of the resulting mixture to 22%, thereby obtaining a water dispersion of PR122 pigment-containing polymer particles A1. The average particle size of the PR122 pigment-containing polymer particles in the thus obtained water dispersion was 100 nm.

Preparation Example 2 (Preparation of Water Dispersion of Pigment Red 150-Containing Polymer Particles A2)

The same procedure as in Preparation Example 1 was repeated except that the "PR122" used therein was replaced with C.I. Pigment Red 150: PR150 "FUJI FAST CARMIME 522-1D" (tradename) available from Fuji Pigment Co., Ltd., thereby obtaining a water dispersion of PR150 pigment-containing polymer particles.

The average particle size of the PR150 pigment-containing polymer particles A2 in the thus obtained water dispersion was 130 nm.

Preparation Example 3 (Preparation of Water Dispersion of Pigment Black 7-Containing Polymer Particles A3)

The same procedure as in Preparation Example 1 was repeated except that the "PR122" used therein was replaced with C.I. Pigment Black 7: PBk7 "MONARCH 717" (tradename) available from Cabot Corporation, thereby obtaining a water dispersion of PBk7 pigment-containing polymer particles A3.

The average particle size of the PBk7 pigment-containing polymer particles A3 in the thus obtained water dispersion was 90 nm.

Production Example 2 (Production of Water Dispersion of Pigment-Free Polymer Particles B)

A reaction vessel equipped with a dropping funnel was charged with the monomers, "LATEMUL E-118B" (sodium polyoxyethylenealkylethersulfate) as a surfactant available from Kao Corporation, potassium persulfate as a polymerization initiator available from FUJIFILM Wako Pure Chemical Corporation and ion-exchanged water as shown in "Initially Charged Monomer Solution" in Table 1, followed by mixing the contents of the reaction vessel with each other and then replacing an inside atmosphere of the reaction vessel with nitrogen gas, to thereby obtain an initially charged monomer solution. In addition, the monomers, surfactant, polymerization initiator and ion-exchanged water as shown in "Dropping Monomer Solution" in Table 1 were mixed with each other to prepare a dropping monomer solution. The resulting dropping monomer solution was charged into the dropping funnel, and an inside atmosphere of the dropping funnel was replaced with nitrogen gas.

In a nitrogen atmosphere, the initially charged monomer solution in the reaction vessel was heated from room temperature to 80°C over 30 minutes while stirring, and while maintaining the initially charged monomer solution at 80°C, the monomers in the dropping funnel were gradually added dropwise to the reaction vessel over 3 hours. After completion of the dropwise addition, while maintaining the inside temperature of the reaction vessel, the contents of the reaction vessel were stirred for 1 hour. Then, the resulting dispersion was filtered through a 200-mesh filter, thereby obtaining a water dispersion of pigment-free polymer particles B (solid content: 44.1%; average particle size: 94 nm).

The weight-average molecular weight and acid value of the polymer b constituting the thus obtained pigment-free polymer particles B were 750,000 and 16 mgKOH/g, respectively.

TABLE 1

| | | Production Example 2 |
|---|---|---|
| Initially charged monomer solution (part(s)) | Methacrylic acid | 0.5 |
| | Methyl methacrylate | 8.5 |
| | 2-Ethylhexyl acrylate | 11 |
| | "LATEMUL E-118B"*1 | 11.1 |
| | Ion-exchanged water | 382.8 |
| | Potassium persulfate | 0.2 |
| Dropping monomer solution (part(s)) | Methacrylic acid | 9.5 |
| | Methyl methacrylate | 161.5 |
| | 2-Ethylhexyl acrylate | 209 |
| | "LATEMUL E-118B"*1 | 35.1 |
| | Ion-exchanged water | 183 |
| | Potassium persulfate | 0.6 |
| Weight-average molecular weight of water-insoluble polymer b | | 750,000 |
| Note: *1: Emulsifier (sodium polyoxyethylenealkylethersulfate) available from Kao Corporation | | |

Example 1 (Production of Water-Based Ink)

The water dispersion of the C.I. Pigment Red 122 (PR122)-containing polymer particles A1 obtained in Preparation Example 1 (solid content: 22%; pigment: 16%; polymer: 6%) were weighed in an amount of 27.3 g, and mixed with 11.4 g of the water dispersion of the pigment-free polymer particles B (solid content: 44%) obtained in Production Example 2, 28.5 g of dipropylene glycol monomethyl ether available from FUJIFILM Wako Pure Chemical Corporation, 2.0 g of dipropylene glycol monopropyl ether available from FUJIFILM Wako Pure Chemical Corporation, 1.0 g of an acetylene glycol-based surfactant "SURFYNOL 440" (an ethyleneoxide (40%) adduct of "SURFYNOL 104"; average molar number of addition of ethyleneoxide: 3.5) available from Nissin Chemical Co., Ltd., and 0.2 g of a polyether-modified silicone-based surfactant "SILFACE SAG005" (wetting agent; HLB: 7; kinematic viscosity: 170 $mm^2$/s (25°C)) available from Nissin Chemical Co., Ltd., and the resulting mixture was further mixed with ion-exchanged water such that a total amount of the mixture was 100 g.

Examples 2 to 9 and Comparative Examples 1 to 8 (Production of Water-Based Inks)

The same procedure as in Example 1 was repeated except that the composition of the ink obtained in Example 1 was changed to those shown in Table 2, thereby obtaining respective water-based inks. Incidentally, the amounts of the water-soluble organic solvents and the surfactants shown in Table 2 are amounts (%) of the respective components compounded in the respective inks, in which the amounts of the water dispersion of the pigment-containing polymer particles A and the water dispersion of the pigment-free polymer particles B represent solid contents thereof.
Using the thus obtained respective inks, the following printing method was conducted to obtain a printed material, and the resulting printed material was evaluated for image density and substrate-adhesion properties (tape peeling) of the inks by the following methods. The results are shown in Table 2.

<Ink-Jet Printing Method>

Under the environmental conditions of a temperature of $25\pm1°C$ and a relative humidity of $30\pm5\%$, the respective water-based inks were loaded into a print evaluation apparatus available from Trytech Co., Ltd., equipped with an ink-jet print head "KJ4B-HD06MHG-STDV" (piezoelectric type) available from Kyocera Corporation.
The operating conditions of the print evaluation apparatus were set to an applied head voltage of 26 V, a drive frequency of 20 kHz, an ejected ink droplet amount of 12 pL, a print head temperature of 32°C, a resolution of 600 dpi, the number of ink shots for flushing before being ejected of 200 shots and a negative pressure of -4.0 kPa. An A4-size film heater available from Kawai Corporation was fixedly mounted to a transportation table of the apparatus so as to heat the following printing media, and the respective printing media were glued onto the film heater such that the longitudinal direction of each printing medium was aligned with a transportation direction thereof.
The heating temperature of the aforementioned film heater was set as follows with respect to the respective printing media.

- A1: Aluminum foil available from UACJ Corporation; film heater temperature: 80°C.
- Polyvinyl chloride: Polyvinyl chloride sheet available from Lintec Corporation; film heater temperature: 60°C.
- PET: Corona discharge-treated polyethylene terephthalate film available from Futamura Chemical Co., Ltd.; film heater temperature: 40°C.

A printing command was transmitted to the aforementioned print evaluation apparatus to eject the ink onto the respective printing media to print characters or images thereon. Thereafter, the thus printed characters or images were dried by a hot air dryer at 60°C for 5 seconds, thereby obtaining a printed material.

<Evaluation of Image Density>

Under the aforementioned printing conditions, a 100% duty solid image was printed using the ink and allowed to stand for one day. The image density of the resulting printed material was measured at optional 10 positions thereof using an optical densitometer "SpectroEye" available from GretagMacbeth AG to calculate an average value of the 10 measured values. The larger the average value becomes, the higher the image density is.

<Evaluation of Substrate-Adhesion Properties (Tape Peeling)>

Under the aforementioned printing conditions, a 100% duty solid image was printed using the ink, and a tape "CELLOTAPE (registered trademark) CT-18S" having a width of 18 mm available from Nichiban Co., Ltd., was attached onto a solid image portion of the resulting printed material. Then, the tape was peeled off from the solid image portion, and the surface condition of the solid image portion after peeling off the tape therefrom was observed to evaluate substrate-adhesion properties thereof according to the following evaluation ratings.

(Evaluation Ratings)

5: No peeling of the solid image portion occurred.
4: Peeled area of the solid image portion was less than 10%.
3: Peeled area of the solid image portion was not less than 10% and less than 30%.
2: Peeled area of the solid image portion was not less than 30% and less than 80%.
1: Peeled area of the solid image portion was not less than 80%.

When the evaluation rating was 4 or 5, the ink was excellent in utilizability in practical applications.

TABLE 2 (part 1 of 2)

| | | Examples | | | | | | | | |
|---|---|---|---|---|---|---|---|---|---|---|
| | | 1 | 2 | 3 | 4 | 5 | 6 | 7 | 8 | 9 |
| Water dispersion of PR122 pigment-containing polymer particles A1 | | 6.0 | 6.0 | 6.0 | 6.0 | 6.0 | 6.0 | 6.0 | | |
| Water dispersion of PR150 pigment-containing polymer particles A2 | | | | | | | | | 6.0 | |
| Water dispersion of PBk7 pigment-containing polymer particles A3 | | | | | | | | | | 6.0 |
| Water dispersion of pigment-free polymer particles B | | 5.0 | 5.0 | 5.0 | 5.0 | 5.0 | 5.0 | 5.0 | 5.0 | 5.0 |
| Water -soluble organic solvent (S) | Dipropylene glycol monomethyl ether (S1) | 28.5 | 27.0 | 27.0 | 27.0 | 27.0 | 24.0 | 24.0 | 27.0 | 27.0 |
| | Dipropylene glycol monopropyl ether | 2.0 | 3.0 | 3.0 | 3.0 | | 6.0 | | 3.0 | 3.0 |
| | 1,2-Hexanediol | | | | | | | 3.0 | | |
| | 1,4-Butanediol | | | | | 3.0 | | 3.0 | | |
| Content (%) of water-soluble organic solvent (S) | | 30.5 | 30.0 | 30.0 | 30.0 | 30.0 | 30.0 | 30.0 | 30.0 | 30.0 |
| Content (%) of (S1) in water-soluble organic solvent (S) | | 93 | 90 | 90 | 90 | 90 | 80 | 80 | 90 | 90 |
| Surfactant | Acetylene glycol-based surfactant | 1.0 | 1.0 | 1.0 | 1.0 | 1.0 | 1.0 | 1.0 | 1.0 | 1.0 |
| | Silicone-based surfactant | 0.2 | 0.2 | 0.2 | 0.2 | 0.2 | 0.2 | 0.2 | 0.2 | 0.2 |
| Printing medium | | Al | Al | PVC*1 | PET | Al | Al | Al | Al | Al |
| Evaluation results | Image density | 2.01 | 2.12 | 2.24 | 2.20 | 2.05 | 1.94 | 1.99 | 2.12 | 1.90 |
| | Substrate-adhesion properties (tape peeling) | 4 | 5 | 4 | 4 | 5 | 4 | 4 | 4 | 4 |
| Note PVC*1: Polyvinyl chloride | | | | | | | | | | |

TABLE 2 (part 2 of 2)

| | Comparative Examples | | | | | | | |
|---|---|---|---|---|---|---|---|---|
| | 1 | 2 | 3 | 4 | 5 | 6 | 7 | 8 |
| Water dispersion of PR122 pigment-containing polymer particles A1 | | 6.0 | 6.0 | 6.0 | 6.0 | 6.0 | 6.0 | 6.0 |
| Water dispersion of PR150 pigment-containing polymer particles A2 | 6.0 | | | | | | | |
| Water dispersion of PBk7 pigment-containing polymer particles A3 | | | | | | | | |
| Water dispersion of pigment-free polymer particles B | 5.0 | 5.0 | 5.0 | 5.0 | 5.0 | 5.0 | 5.0 | 5.0 |

(continued)

| | | Comparative Examples | | | | | | | |
|---|---|---|---|---|---|---|---|---|---|
| | | 1 | 2 | 3 | 4 | 5 | 6 | 7 | 8 |
| Water-soluble organic solvent (S) | Dipropylene glycol monomethyl ether (S1) | 30.0 | 30.0 | 21.0 | 45.0 | 3.0 | 20.0 | 20.0 | 3.0 |
| | Dipropylene glycol monopropyl ether | | | 2.0 | 5.0 | 27.0 | 10.0 | 10.0 | |
| | 1,2-Hexanediol | | | | | | | | 3.0 |
| | 1,4-Butanediol | | | | | | | | 24.0 |
| Content (%) of water-soluble organic solvent (S) | | 30.0 | 30.0 | 23.0 | 50.0 | 30.0 | 30.0 | 30.0 | 30.0 |
| Content (%) of (S1) in water-soluble organic solvent (S) | | 100 | 100 | 91 | 90 | 10 | 67 | 67 | 10 |
| Surfactant | Acetylene glycol-based surfactant | 1.0 | 1.0 | 1.0 | 1.0 | 1.0 | 1.0 | 1.0 | 1.0 |
| | Silicone-based surfactant | 0.2 | 0.2 | 0.2 | 0.2 | 0.2 | 0.2 | 0.2 | 0.2 |
| Printing medium | | Al | Al | Al | Al | Al | Al | PVC*1 | Al |
| Evaluation results | Image density | 2.01 | 2.01 | 1.98 | 2.22 | 1.71 | 1.80 | 1.80 | 1.72 |
| | Substrate-adhesion properties (tape peeling) | 2 | 3 | 3 | 1 | 1 | 2 | 2 | 2 |
| Note PVC*1: Polyvinyl chloride | | | | | | | | | |

From the results shown in Table 2, it was confirmed that the inks obtained in the Examples were capable of providing a printed material that was excellent in substrate-adhesion properties while maintaining high image density, as compared to the inks obtained in the Comparative Examples.

Industrial Applicability

The water-based ink for ink-jet printing according to the present invention is capable of providing a printed material that is excellent in substrate-adhesion properties while maintaining high image density even when printed on a low-liquid absorbing printing medium, and therefore can be suitably used in printing for soft packaging, in particular, such as food packaging, etc.

**Claims**

1.  A water-based ink for ink-jet printing on a low-liquid absorbing printing medium, comprising a pigment, a polymer dispersant, a water-soluble organic solvent and water, in which:

    the water-soluble organic solvent comprises a polypropylene glycol monoalkyl ether;
    a content of the water-soluble organic solvent in the ink is not less than 29% by mass and not more than 35% by mass; and
    a content of dipropylene glycol monomethyl ether (S1) in the water-soluble organic solvent is not less than 75% by mass and not more than 96% by mass.

2.  The water-based ink for ink-jet printing according to claim 1, wherein a content of dipropylene glycol monomethyl ether (S1) in the water-soluble organic solvent is not less than 78% by mass and not more than 95% by mass.

3.  The water-based ink for ink-jet printing according to claim 1 or 2, wherein a monoalkyl ether moiety of the polypropylene glycol monoalkyl ether is at least one monoalkyl ether selected from the group consisting of monomethyl ether and monopropyl ether.

20

4. The water-based ink for ink-jet printing according to any one of claims 1 to 3, wherein a polypropylene glycol moiety of the polypropylene glycol monoalkyl ether is dipropylene glycol.

5. The water-based ink for ink-jet printing according to claim 3 or 4, wherein the polypropylene glycol monoalkyl ether is dipropylene glycol monomethyl ether.

6. The water-based ink for ink-jet printing according to any one of claims 1 to 5, further comprising an alkanediol having not less than 4 and not more than 6 carbon atoms.

7. The water-based ink for ink-jet printing according to any one of claims 1 to 6, wherein the pigment is at least one pigment selected from the group consisting of a quinacridone pigment, an azo pigment and a carbon black pigment.

8. The water-based ink for ink-jet printing according to any one of claims 1 to 7, wherein the pigment is in the form of pigment-containing polymer particles.

9. The water-based ink for ink-jet printing according to claim 8, wherein the pigment-containing polymer particles are in the form of polymer particles crosslinked with a crosslinking agent.

10. The water-based ink for ink-jet printing according to any one of claims 1 to 9, further comprising pigment-free polymer particles B.

11. The water-based ink for ink-jet printing according to any one of claims 1 to 10, further comprising a surfactant.

12. The water-based ink for ink-jet printing according to any one of claims 1 to 11, wherein the low-liquid absorbing printing medium is formed of a metal or a synthetic resin.

13. The water-based ink for ink-jet printing according to claim 12, wherein the metal is aluminum or an aluminum alloy.

14. An ink-jet printing method comprising the step of printing characters or images on a low-liquid absorbing printing medium using the water-based ink according to any one of claims 1 to 13.

15. A use of the water-based ink for ink-jet printing according to any one of claims 1 to 13 in printing for soft packaging.


**Patentansprüche**

1. Wasserbasierte Tinte für den Tintenstrahldruck auf einem Druckmedium mit geringer Flüssigkeitsaufnahme, umfassend ein Pigment, ein Polymerdispergiermittel, ein wasserlösliches organisches Lösungsmittel und Wasser, wobei:

   das wasserlösliche organische Lösungsmittel einen Polypropylenglykolmonoalkylether umfasst;
   der Gehalt des wasserlöslichen organischen Lösungsmittels in der Tinte nicht weniger als 29 Massenprozent und nicht mehr als 35 Massenprozent beträgt; und
   der Gehalt an Dipropylenglykolmonomethylether (S1) in dem wasserlöslichen organischen Lösungsmittel nicht weniger als 75 Massenprozent und nicht mehr als 96 Massenprozent beträgt.

2. Wasserbasierte Tinte für den Tintenstrahldruck gemäß Anspruch 1, wobei der Gehalt an Dipropylenglykolmonomethylether (S1) in dem wasserlöslichen organischen Lösungsmittel nicht weniger als 78 Massenprozent und nicht mehr als 95 Massenprozent beträgt.

3. Wasserbasierte Tinte für den Tintenstrahldruck gemäß Anspruch 1 oder 2, wobei eine Monoalkylethergruppe des Polypropylenglykolmonoalkylethers mindestens ein Monoalkylether ist, ausgewählt aus der Gruppe bestehend aus Monomethylether und Monopropylether.

4. Wasserbasierte Tinte für den Tintenstrahldruck gemäß mindestens einem der Ansprüche 1 bis 3, wobei eine Polypropylenglykolgruppe des Polypropylenglykolmonoalkylethers Dipropylenglykol ist.

5. Wasserbasierte Tinte für den Tintenstrahldruck gemäß Anspruch 3 oder 4, wobei der Polypropylenglykolmonoalkylether Dipropylenglykolmonomethylether ist.

**6.** Wasserbasierte Tinte für den Tintenstrahldruck gemäß mindestens einem der Ansprüche 1 bis 5, ferner umfassend ein Alkandiol mit nicht weniger als 4 und nicht mehr als 6 Kohlenstoffatomen.

**7.** Wasserbasierte Tinte für den Tintenstrahldruck gemäß mindestens einem der Ansprüche 1 bis 6, wobei das Pigment mindestens ein Pigment ist, ausgewählt aus der Gruppe bestehend aus einem Chinacridonpigment, einem Azopigment und einem Rußpigment.

**8.** Wasserbasierte Tinte für den Tintenstrahldruck gemäß mindestens einem der Ansprüche 1 bis 7, wobei das Pigment in Form von Pigment-haltigen Polymerpartikeln vorliegt.

**9.** Wasserbasierte Tinte für den Tintenstrahldruck gemäß Anspruch 8, wobei die Pigment-haltigen Polymerpartikel in Form von Polymerpartikeln vorliegen, die mit einem Vernetzungsmittel vernetzt sind.

**10.** Wasserbasierte Tinte für den Tintenstrahldruck gemäß mindestens einem der Ansprüche 1 bis 9, ferner umfassend pigmentfreie Polymerpartikel B.

**11.** Wasserbasierte Tinte für den Tintenstrahldruck gemäß mindestens einem der Ansprüche 1 bis 10, ferner umfassend ein Tensid.

**12.** Wasserbasierte Tinte für den Tintenstrahldruck gemäß mindestens einem der Ansprüche 1 bis 11, wobei das Druckmedium mit geringer Flüssigkeitsaufnahme aus einem Metall oder einem Kunstharz gebildet ist.

**13.** Wasserbasierte Tinte für den Tintenstrahldruck gemäß Anspruch 12, wobei das Metall Aluminium oder eine Aluminiumlegierung ist.

**14.** Tintenstrahldruckverfahren, das den Schritt des Druckens von Zeichen oder Bildern auf ein Druckmedium mit geringer Flüssigkeitsaufnahme unter Verwendung der wasserbasierten Tinte gemäß mindestens einem der Ansprüche 1 bis 13 umfasst.

**15.** Verwendung der wasserbasierten Tinte für den Tintenstrahldruck gemäß mindestens einem der Ansprüche 1 bis 13 zum Bedrucken von flexiblen Verpackungen.

**Revendications**

**1.** Encre aqueuse pour impression à jet d'encre sur un support d'impression à faible absorption de liquide, comprenant un pigment, un dispersant polymère, un solvant organique hydrosoluble et de l'eau, dans laquelle :

le solvant organique hydrosoluble comprend un éther monoalkyle de polypropylène glycol ;
une teneur en solvant organique hydrosoluble dans l'encre n'est pas inférieure à 29 % en masse et n'est pas supérieure à 35 % en masse ; et
une teneur en éther monométhylique de dipropylène glycol (S1) dans le solvant organique hydrosoluble n'est pas inférieure à 75 % en masse et n'est pas supérieure à 96 % en masse.

**2.** Encre aqueuse pour impression à jet d'encre selon la revendication 1, dans laquelle une teneur en éther monométhylique de dipropylène glycol (S1) dans le solvant organique hydrosoluble n'est pas inférieure à 78 % en masse et n'est pas supérieure à 95 % en masse.

**3.** Encre aqueuse pour impression à jet d'encre selon la revendication 1 ou la revendication 2, dans laquelle une fraction éther monoalkyle de l'éther monoalkyle de polypropylène glycol est au moins un éther monoalkyle sélectionné dans le groupe consistant en un éther monométhylique et un éther monopropylique.

**4.** Encre aqueuse pour impression à jet d'encre selon l'une quelconque des revendications 1 à 3, dans laquelle une fraction polypropylène glycol de l'éther monoalkyle de polypropylène glycol est le dipropylène glycol.

**5.** Encre aqueuse pour impression à jet d'encre selon la revendication 3 ou la revendication 4, dans laquelle l'éther monoalkyle de polypropylène glycol est l'éther monométhylique de dipropylène glycol.

6. Encre aqueuse pour impression à jet d'encre selon l'une quelconque des revendications 1 à 5, comprenant en outre un alcanediol ne présentant pas moins de 4 et pas plus de 6 atomes de carbone.

7. Encre aqueuse pour impression à jet d'encre selon l'une quelconque des revendications 1 à 6, dans laquelle le pigment est au moins un pigment sélectionné dans le groupe consistant en un pigment de quinacridone, un pigment azoïque et un pigment noir de carbone.

8. Encre aqueuse pour impression à jet d'encre selon l'une quelconque des revendications 1 à 7, dans laquelle le pigment est sous la forme de particules de polymère contenant un pigment.

9. Encre aqueuse pour impression à jet d'encre selon la revendication 8, dans laquelle les particules de polymère contenant un pigment sont sous la forme de particules de polymère réticulées avec un agent de réticulation.

10. Encre aqueuse pour impression à jet d'encre selon l'une quelconque des revendications 1 à 9, comprenant en outre des particules B de polymère exemptes de pigment.

11. Encre aqueuse pour impression à jet d'encre selon l'une quelconque des revendications 1 à 10, comprenant en outre un tensioactif.

12. Encre aqueuse pour impression à jet d'encre selon l'une quelconque des revendications 1 à 11, dans laquelle le support d'impression à faible absorption de liquide est formé d'un métal ou d'une résine synthétique.

13. Encre aqueuse pour impression à jet d'encre selon la revendication 12, dans laquelle le métal est de l'aluminium ou un alliage d'aluminium.

14. Procédé d'impression à jet d'encre comprenant l'étape d'impression de caractères ou d'images sur un support d'impression à faible absorption de liquide en utilisant l'encre aqueuse selon l'une quelconque des revendications 1 à 13.

15. Utilisation de l'encre aqueuse pour impression à jet d'encre selon l'une quelconque des revendications 1 à 13 dans l'impression pour emballage souple.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014515051 A
- JP 2018115325 A
- JP 2009263557 A
- JP 2013163289 A
- JP 2013112801 A
- JP 2011157417 A
- JP 2005330309 A
- JP 2018080255 A